# FASCICULE DE BREVET EUROPEEN

(11) **EP 1 183 160 B1**
(45) Date de publication et mention de la délivrance du brevet: **30.07.2003**
(21) Numéro de dépôt: 00940486.4
(22) Date de dépôt: 09.06.2000
(51) Int. Cl.: B60G 21/05, B60G 7/00

(54) **ESSIEU AUTODIRECTEUR POUR VEHICULE**
SELBSTLENKENDE ACHSE
SELF-STEERING AXLE FOR VEHICLE

(30) Priorité: 09.06.1999 FR 9907268
(43) Date de publication de la demande: 06.03.2002
(73) Titulaire: Renault s.a.s., 92100 Boulogne Billancourt (FR)
(72) Inventeur: VENEAU, Jean, F-92500 Rueil Malmaison (FR)
(86) Numéro de dépôt international: FR0001609
(87) Numéro de publication internationale: WO00074961

(56) Documents cités:
- WO-A-97/31794
- DE-A- 2 822 058
- DE-A- 3 808 490
- FR-A- 2 701 001
- FR-A- 2 707 560
- FR-A- 2 726 227
- US-A- 4 828 279

## Description

L'invention concerne un essieu autodirecteur pour un véhicule, notamment un véhicule automobile

L'invention concerne plus particulièrement une essieu autodirecteur pour un véhicule, selon le préambule de la revendication 1.

Les essieux autodirecteurs de ce type présentent l'avantage, par rapport à des essieux conventionnels pour lesquels le porte-fusée est lié rigidement au bras, d'améliorer considérablement la tenue de route des véhicules qu'ils équipent.

En effet, lorsque le véhicule roule en suivant un virage, les roues de celui-ci qui sont situées à l'extérieur du virage sont nécessairement sollicitées transversalement en appui. Un véhicule qui est équipé, par exemple, d'un essieu directeur conventionnel à l'avant et d'un essieu autodirecteur du type précédemment décrit à l'arrière, présente l'avantage, par rapport à un véhicule équipé d'un essieu arrière conventionnel, de bénéficier d'une meilleure tenue de route du fait du braquage induit du porte-fusée dont la roue arrière associée est sollicitée autour d'un axe vertical.

En effet, un essieu arrière conventionnel "suit" en virage la trajectoire du véhicule, laquelle est imposée par l'essieu directeur avant, en provoquant un pivotement d'axe vertical ou "micro-braquage" de la roue, l'axe vertical passant par le point de contact entre la roue et la chaussée, c'est à dire au niveau du contact du pneumatique de la roue et du revêtement de la chaussée.

Dans certaines configurations de virages particulièrement appuyés, et ce notamment lorsque la chaussée est humide ou recouverte de gravillons, la roue extérieure sollicitée peut, sous l'effet de l'effort transversal qui lui est appliqué, déraper sur le revêtement de la chaussée.

Au contraire, un essieu arrière autodirecteur suit en virage la trajectoire du véhicule qui est imposée par l'essieu directeur avant en réalisant, dans la limite angulaire de rotation autorisée par le palier élastique de liaison, un pivotement d'axe vertical de la roue au niveau de sa liaison avec le porte-fusée. La position de l'axe vertical de pivotement de la roue n'est pas tributaire du contact entre le pneumatique et la chaussée. WO 97 31 794 décrit un essieu autodirecteur selon le préambule de la revendication 1.

FR 2 726 227, FR 2 701 001, DE 3 808 490, FR 2 707 560, US 4 828 279 et DE 2 822 058 décrivent d'autres types d'essieu.

Le document FR-A1-2.621.277 décrit un essieu autodirecteur.

Ce document décrit et représente un essieu à roues indépendantes, à bras longitudinaux tirés ou poussés, comportant pour chaque roue un porte-fusée ou porte-roué qui est monté sur le bras correspondant par au moins trois éléments élastiques dont deux sont disposés en arrière par rapport au plan vertical passant par l'axe de la roue suivant un axe sensiblement vertical, ces éléments élastiques étant d'axe longitudinal et présentant un élasticité relativement faible dans le sens transversal du véhicule et une élasticité relativement élevée dans le sens longitudinal du véhicule.

En particulier, l'essieu autodirecteur décrit et représenté dans le document FR-A1-2.621.277 comporte quatre éléments élastiques d'axes longitudinaux qui sont disposés sensiblement aux quatre coins d'un trapèze compris dans le plan de la roue, lequel trapèze est centré sur l'axe de la roue.

Lorsque la roue est soumise à une sollicitation en appui, ces éléments élastiques sont susceptibles de se déformer autour d'un axe vertical sensiblement perpendiculaire à l'axe de la roue.

Du fait du confinement de ces éléments à l'intérieur de la roue, la distance entre chacun de ces éléments et l'axe vertical de pivotement est réduite et nécessite l'emploi de valeurs élevées de raideur pour les éléments élastiques afin d'éviter les déplacements longitudinaux sous effort.

Par ailleurs, en fonction de la charge à la roue, ces éléments élastiques peuvent amener l'axe de pivotement, théoriquement vertical, à s'incliner dans le plan de roue par "effet de chasse". C'est le cas notamment lorsque le véhicule freine. L'inclinaison de l'axe de pivotement dans le plan de roue modifie la valeur du braquage induit puisque le porte-fusée est sensé pivoter autour de cet axe.

Ainsi, avec un tel essieu autodirecteur dont le principe de fonctionnement est basé uniquement sur la déformation d'éléments élastiques, il n'est pas possible, en fonction des conditions de roulage du véhicule, d'obtenir un braquage induit contrôlé de façon rigoureuse. Ceci est particulièrement préjudiciable à la tenue de route et à l'usure des pneumatiques, le pincement des roues pouvant être amené à varier de façon importante et provoquer un défaut de parallélisme de l'essieu autodirecteur.

Enfin, le confinement des éléments élastiques à l'intérieur de la roue est peu favorable à une construction en grande série qui est, par essence même, tributaire de tolérances de fabrication en rapport avec des coûts de fabrication raisonnables.

Dans ce but, l'invention propose un essieu autodirecteur selon le préambule de la revendication 1, caractérisé en ce que ladite barre de guidage est de direction générale comprise dans un plan horizontal, et en ce que son extrémité de liaison au bras est guidée par un palier élastique déformable de guidage.

Selon d'autres caractéristiques de l'invention :
- la barre de guidage est inclinée dans ledit plan horizontal d'un angle déterminé par rapport à l'axe du palier élastique déformable de guidage,
- l'axe du palier élastique déformable de guidage est transversal,
- l'angle d'inclinaison de la barre par rapport à l'axe transversal du palier élastique déformable de guidage est d'une valeur faible, et le palier élastique déformable de guidage peut coulisser transversalement suivant son axe transversal,
- le porte-fusée est lié au bras par des moyens supplémentaires de guidage comportant une bielle de guidage de direction générale comprise dans un plan horizontal, qui est inclinée d'un angle d'une valeur élevée par rapport à l'axe transversal du palier élastique déformable de guidage,
- l'angle d'inclinaison de la barre par rapport à l'axe transversal du palier élastique déformable est d'une valeur élevée et en ce que le palier élastique déformable de guidage est monté sans jeu dans la direction transversale,
- la barre de guidage comporte des moyens de rappel élastique à l'encontre de son mouvement vers le demi-essieu opposé et comporte des moyens de butée à l'encontre de son mouvement en éloignement du demi-essieu opposé,
- les moyens de rappel élastique de la barre de guidage à l'encontre de son mouvement vers le demi-essieu opposé sont obtenus par la raideur réduite selon la direction transversale du palier élastique déformable de guidage qui s'oppose au mouvement de la barre vers le demi-essieu opposé seulement en fin de course du mouvement de coulissement transversal du palier élastique déformable de guidage, et les moyens de butée de la barre de guidage à l'encontre de son mouvement en éloignement du demi-essieu opposé sont constitués par la bielle de guidage qui est liée au porte-fusée et au bras par des rotules, et qui s'oppose en traction au mouvement de la barre en éloignement du demi-essieu opposé,
- les moyens de rappel élastique de la barre de guidage à l'encontre de son mouvement vers le demi-essieu opposé sont obtenus par le palier élastique déformable de guidage qui présente une raideur réduite selon la direction transversale vers le demi-essieu opposé, et les moyens de butée de la barre de guidage à l'encontre de son mouvement en éloignement du demi-essieu opposé sont constitués par le palier élastique déformable de guidage qui présente une raideur élevée selon la direction transversale en éloignement du demi-essieu opposé,
- l'essieu autodirecteur comporte des moyens de butée verticale du porte-fusée par rapport au bras pour s'opposer au basculement du porte-fusée suivant un axe passant par le palier élastique longitudinal arrière de liaison et le palier élastique déformable transversal de guidage.
- les moyens de butée verticale du porte-fusée par rapport au bras comportent une tige d'immobilisation de direction verticale qui est agencée en avant de l'axe de la roue et dont les extrémités sont fixées sur le porte-fusée et sur le bras,
- les moyens de butée verticale du porte-fusée par rapport au bras comportent un joint élastique de retenue verticale qui lie directement le porte-fusée au bras et qui est d'une raideur élevée suivant la direction verticale,
- le joint élastique de retenue verticale présente une raideur réduite suivant une direction horizontale vers le demi-essieu opposé et une raideur élevée suivant une direction horizontale en éloignement du demi-essieu opposé,
- l'essieu autodirecteur comporte une biellette en forme de Y couché, de direction générale comprise dans le plan horizontal, qui est inclinée d'un angle élevé par rapport à l'axe transversal du palier élastique déformable, qui est liée au porte-fusée par une rotule agencée à l'extrémité de sa branche convergente, et qui est liée au bras par deux paliers élastiques d'axe vertical agencés aux extrémités de ses branches divergentes, pour constituer simultanément lesdits moyens supplémentaires de guidage et les moyens de butée verticale du porte-fusée,
- la barre de guidage présente la forme d'une plaque triangulaire flexible de direction générale comprise dans ledit plan horizontal dont le sommet principal est lié au palier élastique déformable transversal de guidage et dont les deux sommets de sa base sont liés au porte-fusée,
- les deux sommets de la base de la plaque triangulaire sont articulés sur le porte-fusée par deux bagues élastiques d'axe vertical,
- les deux sommets de la base de la plaque triangulaire sont liés rigidement au porte-fusée,
- les barres de guidage de chaque demi-essieu sont liées en leurs extrémités de liaison portant les paliers élastiques de guidage par une barre de couplage transversale rigide, pour coupler les mouvements de rotation d'axe vertical de chacun des portes-fusée de l'essieu.

D'autres caractéristiques et avantages de l'invention apparaîtront à la lecture de la description détaillée qui suit pour la compréhension de laquelle on se reportera aux dessins annexés dans lesquels :
- la figure 1a est une vue schématique de dessus d'un demi-essieu autodirecteur selon un premier mode de réalisation de l'invention représenté selon une position de repos de la roue extérieure ;
- la figure 1b est une vue de détail selon la figure 1a d'un palier élastique déformable de guidage selon une coupe passant un plan horizontal médian du palier ;
- la figure 2a est une vue schématique de dessus du demi-essieu autodirecteur de la figure 1 représenté dans une position de sollicitation transversale de la roue extérieure ;
- la figure 2b est une vue de détail selon la figure 2a du palier élastique déformable de guidage selon une coupe passant un plan horizontal médian du palier ;
- la figure 3 est vue en perspective d'un demi-essieu autodirecteur selon le premier mode de réalisation de l'invention représenté en position de repos de la roue extérieure ;
- la figure 4 est une vue schématique de dessus d'un essieu autodirecteur selon un deuxième mode de réalisation de l'invention dans lequel les demi-essieux autodirecteurs sont couplés représenté en position de sollicitation transversale de la roue extérieure ;
- la figure 5 est une vue schématique de dessus d'un demi-essieu autodirecteur selon un troisième mode de réalisation de l'invention ;
- la figure 6 est une vue schématique de dessus d'un demi-essieu autodirecteur selon un quatrième mode de réalisation de l'invention représenté dans une position de repos de la roue extérieure ;
- la figure 7 est une vue schématique de dessus selon un cinquième mode de réalisation de l'invention représenté dans une position de repos de la roue extérieure ;
- la figure 8 est une vue en perspective d'un demi-essieu autodirecteur selon le quatrième mode de réalisation de l'invention représenté en position de repos de la roue extérieure ; et
- la figure 9 est une en perspective d'un demi-essieu autodirecteur selon le cinquième mode de réalisation de l'invention représenté en position de repos de la roue extérieure.

Dans la description qui va suivre, des chiffres de référence identiques désignent des pièces identiques ou ayant des fonctions similaires, et les termes "horizontal", "vertical", "transversal", etc. sont utilisés, à titre non limitatif, en référence aux figures.

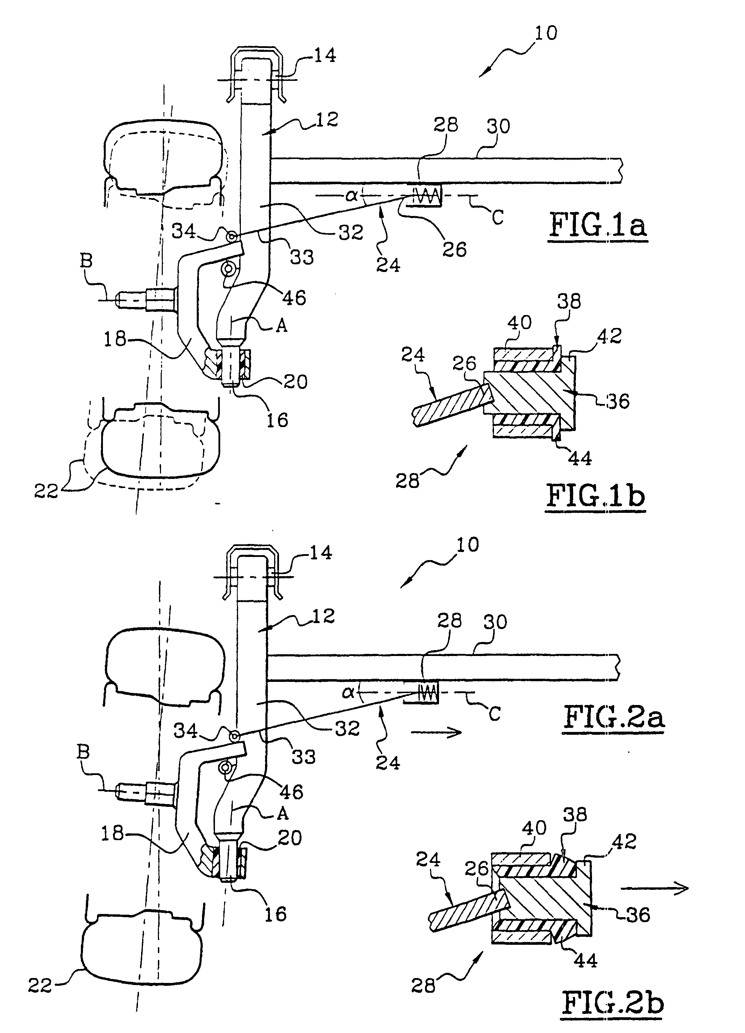

On a représenté aux figures 1 à 9 différents modes de réalisation d'un essieu autodirecteur réalisé conformément à l'invention.

De manière connue, un tel essieu autodirecteur est destiné à équiper un véhicule pour provoquer un braquage induit, vers l'intérieur du virage, de la roue qui est sollicitée transversalement en appui vers l'extérieur du virage. L'essieu autodirecteur peut par exemple être monté à l'arrière d'un véhicule automobile comportant un essieu avant directeur conventionnel, ou encore, de façon non limitative de l'invention, équiper un véhicule roulant d'un autre type comme une remorque, qui peut comporter un ou plusieurs essieux du type de celui qui est l'objet de la présente description.

De manière connue, un essieu autodirecteur est formé de la réunion de deux demi-essieux 10 qui sont opposés transversalement par rapport à la direction sensiblement longitudinale du véhicule.

De manière connue, chaque demi-essieu 10 comporte un bras 12 qui est articulé en rotation par rapport à un axe de bras 14 transversal solidaire de la caisse du véhicule.

Dans les modes de réalisation de l'invention exposés dans la présente description, on a représenté différents types de demi-essieux 10 comportant des bras 12 tirés qui s'étendent sensiblement vers l'arrière du véhicule, situé en bas sur les figures 1a, 2a, 4, 5.

Cette disposition n'est pas restrictive de l'invention et il sera compris que les bras 12 peuvent être aussi des bras poussés s'étendant vers l'avant du véhicule. De manière non limitative de l'invention, ces bras 12 ont sensiblement des formes en L couché et peuvent être soit indépendants, soit liés entre eux au niveau de leurs branches transversales, selon que la suspension est à roues indépendantes ou non. Chaque bras 12 est articulé sur l'axe de bras 14 au niveau du coude du L.

Une extrémité libre arrière 16 de chaque bras 12 porte un porte-fusée 18. Conformément à l'invention, le porte-fusée 18 est lié à l'extrémité libre arrière 16 du bras 12 par l'intermédiaire d'au moins un palier 20 élastique d'axe A longitudinal de liaison au bras 12, qui est agencé en arrière d'un axe B de roue, et qui est susceptible de se déformer en s'écartant de son axe A en réponse à une sollicitation transversale d'une roue 22 montée à rotation sur le porte-fusée 18, de façon à articuler le porte-fusée 18 en rotation autour d'un axe vertical afin de provoquer un braquage induit, vers le demi-essieu 10 opposé, de la roue 22.

A cet effet, l'extrémité arrière 16 du bras 12 est conformée en une portée cylindrique qui est reçue dans une bague intérieure du palier 20 de liaison, le porte-fusée 18 recevant une-bague extérieure du palier 20 de liaison. Le palier 20 de liaison est, de façon non limitative de l'invention, réalisé en matériau élastomère.

Cette disposition n'est pas limitative de l'invention, et tout autre moyen de liaison comportant un palier 20 de liaison d'axe A longitudinal peut être utilisé, de même que le bras 12 peut être lié au porte-fusée 18 par plusieurs paliers 20 de liaison d'axes longitudinaux A parallèles, du moment qu'ils sont sensiblement alignés suivant un axe vertical, longitudinalement en arrière de l'axe B de roue, pour permettre un pivotement d'axe vertical commun des paliers 20 de liaison,

Par ailleurs, conformément à l'invention, le porte-fusée 18 est lié au bras, longitudinalement en avant de l'axe B de roue, par l'intermédiaire d'une barre 24 de guidage dont l'extrémité 26 de liaison au bras 12 est guidée par un palier 28 déformable de guidage.

Conformément aux figures 1 à 9, et de façon non limitative de l'invention, l'extrémité 26 de la barre 24 de guidage est plus précisément liée à une branche transversale 30 du L du bras 12 par l'intermédiaire du palier 28 déformable de guidage dont l'axe C est lui aussi transversal. La branche transversale 30 du bras s'étend transversalement vers le demi-essieu opposé.

La branche 30 est agencée nettement en avant du porte-fusée 18, à proximité de l'axe 14 d'articulation du bras 12. Une branche longitudinale 32 du L du bras 12 permet les débattements angulaires indispensables pour que le bras 12 puisse remplir son rôle d'élément de suspension du véhicule.

De la sorte, dans la configuration représentée sur les figures 1 à 9, la barre 24 de guidage s'étend, suivant une direction générale comprise dans le plan horizontal, entre au moins un point d'ancrage 34 du porte-fusée 18 agencé en avant de l'axe B de roue et le palier 28 transversal déformable de guidage qui est lié à la branche transversale 30 du bras, en faisant un angle α ou β déterminé avec la branche transversale 32 du bras 12.

De la sorte, la barre de guidage 24 joue le rôle d'un bras de levier qui permet la transmission des efforts transversaux en provenance de la roue 22 vers le palier 28 élastique déformable de guidage.

Le palier 28 est en effet déformable, c'est à dire qu'il est susceptible de se déformer dans la direction transversale pour permettre de petits déplacements transversaux de l'extrémité 26 de la barre 24 de guidage par rapport à la branche 30 transversale du bras 12.

Le porte-fusée 18 est de la sorte susceptible de pivoter autour d'un axe vertical en réponse aux sollicitations transversale de la roue 22.

La position de l'axe vertical de rotation du porte-fusée 18 dépend des articulations du porte-fusée 18. En effet la position de cet axe passe, dans le plan horizontal, par un centre instantané de rotation qui est situé à l'intersection de la direction de la barre 24 de guidage et de la normale à l'axe du palier 20 de liaison.

Cette position n'est donc pas fixe, car comme le palier 20 est susceptible de s'écarter de son axe A initial, la normale à l'axe du palier 20 s'écarte aussi de sa position initiale au cours du pivotement de la roue 22, ce qui tend à rapprocher ce centre instantané de rotation de la roue 22. Il reste toutefois, par construction, "à l'extérieur" de la roue 22.

Cette disposition n'est pas restrictive de l'invention, et il aurait été possible de lier la barre 24 de guidage directement à la branche longitudinale 32 du bras 12. Toutefois, une telle disposition impose des raideurs de palier 28 de guidage bien supérieures à celles du palier 28 de guidage précédemment évoqué, et nécessite donc des paliers 28 de guidage très onéreux.

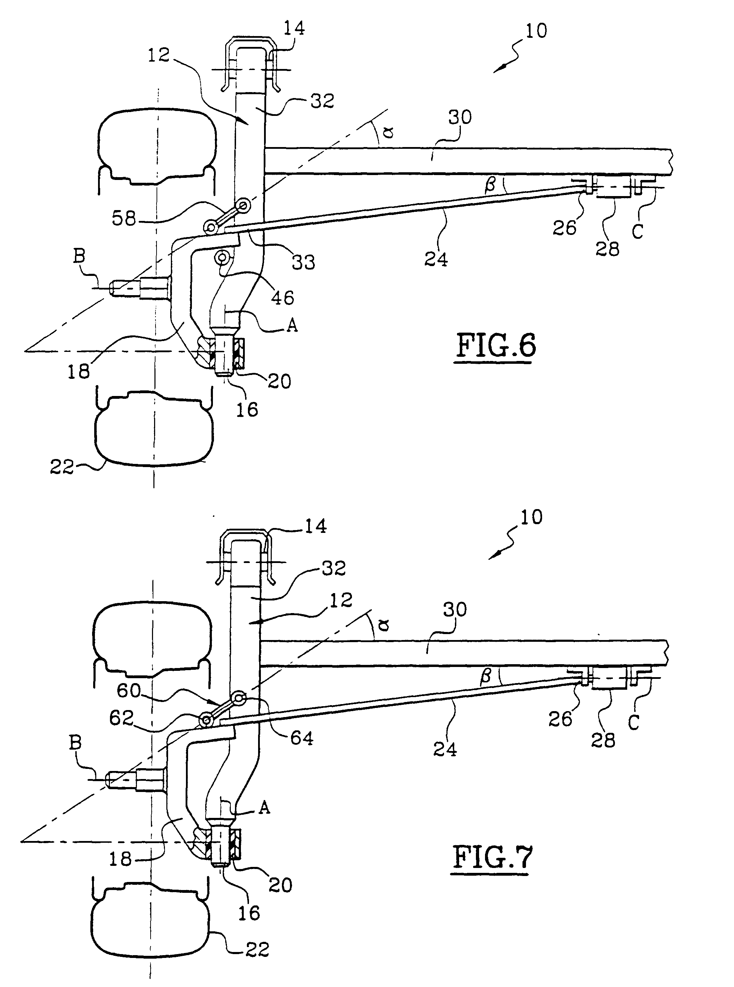

Ainsi, pour des raisons de facilité d'obtention d'un point de vue d'une production industrielle de grande série, il est préférable dans ce cas d'utiliser un palier 28 de guidage ne présentant une raideur que suivant la direction verticale, cette raideur étant destinée à absorber les efforts verticaux transmis par la roue et le porte-fusée 18, et comme on le verra ultérieurement pour en référence aux figures 6, 7, 8, et 9, de déporter les raideurs axiales du palier de guidage 28 en un autre point de fixation du porte-fusée 18.

Le porte-fusée 18 est donc maintenu par rapport au bras 12 par les paliers élastiques de liaison 20 et de guidage 28. Pour éviter que le porte-fusée 18 ne bascule autour d'un axe (non représenté) passant par le centre de ces deux paliers, il est prévu des moyens de butée verticale du porte-fusée 18 qui le lient au bras 12 suivant la direction verticale. De la sorte, le porte-fusée 18 n'est libre de pivoter qu'autour du seul axe vertical passant par le centre instantané de rotation précédemment évoqué. Ces moyens de butée verticale seront décrits en référence aux différents modes de réalisation de l'invention.

Les figures 1a à 3 décrivent un premier mode de réalisation de l'invention dans lequel la barre de guidage est inclinée dans le plan horizontal d'un angle α d'une valeur élevée, et dans lequel le palier 28 de guidage est monté sans jeu selon la direction transversale.

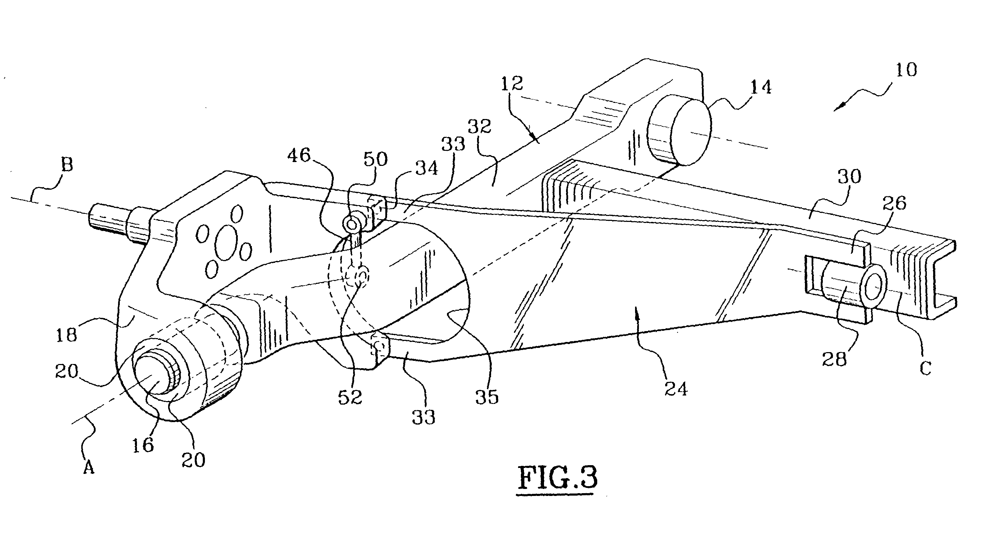

La barre de guidage 24 est sensiblement de la forme d'une plaque triangulaire dont l'extrémité 26 est située au sommet principal et dont deux sommets 33 de sa base sont liés au porte-fusée 18 par des points d'ancrage 34 qui peuvent être indifféremment constitués par des vis, comme illustré à la figure 3, ou encore des liaisons de type rotule comme illustré aux figures 1a et 2a.

Avantageusement, cette barre de guidage 24 est flexible pour contribuer à absorber les efforts longitudinaux transmis par la roue 22 au porte-fusée 18, et elle comporte une échancrure 35 en forme de U couché, représentée figure 3, pour permettre la passage du bras 12.

Dans cette configuration, comme illustré sur les figures 1a à 3, la barre 24 de guidage est susceptible de transmettre au palier 28 de guidage les efforts horizontaux résultant de la sollicitation transversale de la roue 22 et du porte-fusée 18. Le palier 28 est déformable élastiquement dans la direction transversale et autorise un léger déplacement transversal de l'extrémité 26 de la barre de guidage 24, et donc un déplacement transversal de la barre de guidage 24 qui permet, en réponse à une sollicitation transversale de la roue 22 vers le demi-essieu opposé (non représenté, vers la droite des figures 1a et 2a), un pivotement d'axe vertical dans le sens horaire du porte-fusée 18, qui permet à celui-ci de provoquer un braquage induit de la roue 22, représenté en pointillés sur la figure 1a et en traits pleins sur la figure 2a.

Le palier élastique 28 de guidage comporte à cet effet une raideur réduite dans la direction transversale et dans le sens tourné vers le demi-essieu opposé (non représenté).

Par ailleurs, la barre de guidage 24 comporte des moyens de butée à l'encontre de son mouvement dans le plan horizontal en éloignement du demi-essieu opposé, c'est à dire vers le bras 12 du demi-essieu auquel elle est liée.

Dans le premier mode de réalisation décrit en référence aux figures 1a à 3, ces moyens de butée sont obtenus simplement par une raideur transversale élevée du palier 28 de guidage dans le sens opposé au demi-essieu opposé.

Comme l'illustrent plus spécifiquement les figures 1b et 2b, le palier 28 peut par exemple comporter une bague intérieure 36 à laquelle est liée l'extrémité 26 de la barre de guidage 24, dont la périphérie extérieure est montée serrée dans un bloc élastomère 38, qui est lui même monté serré dans un cavalier 40 qui est lié à la branche 30 du bras 12. La bague 36 comporte une épaulement 42 tourné vers le demi-essieu opposé, qui prend appui sur le bloc élastomère 38, qui comporte aussi un épaulement 44 tourné vers le demi-essieu opposé, en appui sur la cavalier 40.

De la sorte, le palier élastique 28 de guidage est mobile entre une position de repos, représentée à la figure 1a, et une position de déformation, représentée à la figure 1b, dans laquelle l'ajustement serré de la bague 36, du bloc élastomère 38, et du cavalier 40 ne permet le déplacement axial de la bague 36 par rapport au cavalier 40 que dans la direction du demi-essieu opposé, comme indiqué par la flèche de la figure 1b.

Lorsque, au contraire, le porte-fusée 18 est sollicité transversalement en éloignement du demi-essieu opposé, comme c'est le cas notamment en cas de freinage du véhicule, le bloc élastomère, de raideur élevée dans le sens opposé au demi-essieu opposé, est comprimé axialement vers le bras 12 entre l'épaulement 42 de la bague 36 et l'épaulement 44 du cavalier 40, et réalise ainsi une butée axiale de l'extrémité 26 de la barre de guidage 24 en éloignement du demi-essieu opposé.

Par ailleurs, comme l'illustrent les figures 1a, 2a, et 3, les moyens de butée verticale du porte-fusée 18 par rapport au bras 12 sont constitués d'une tige 46 d'immobilisation verticale, qui est liée, par exemple par des rotules ou encore par des pivots 50 et 52, comme représenté à la figure 3, au porte-fusée 18 et au bras 12. Comme on l'a vu, cette tige 46 d'immobilisation verticale permet d'éviter le basculement du porte-fusée 18 autour d'un axe passant par les centres respectifs des paliers de liaison 20 et de guidage 28.

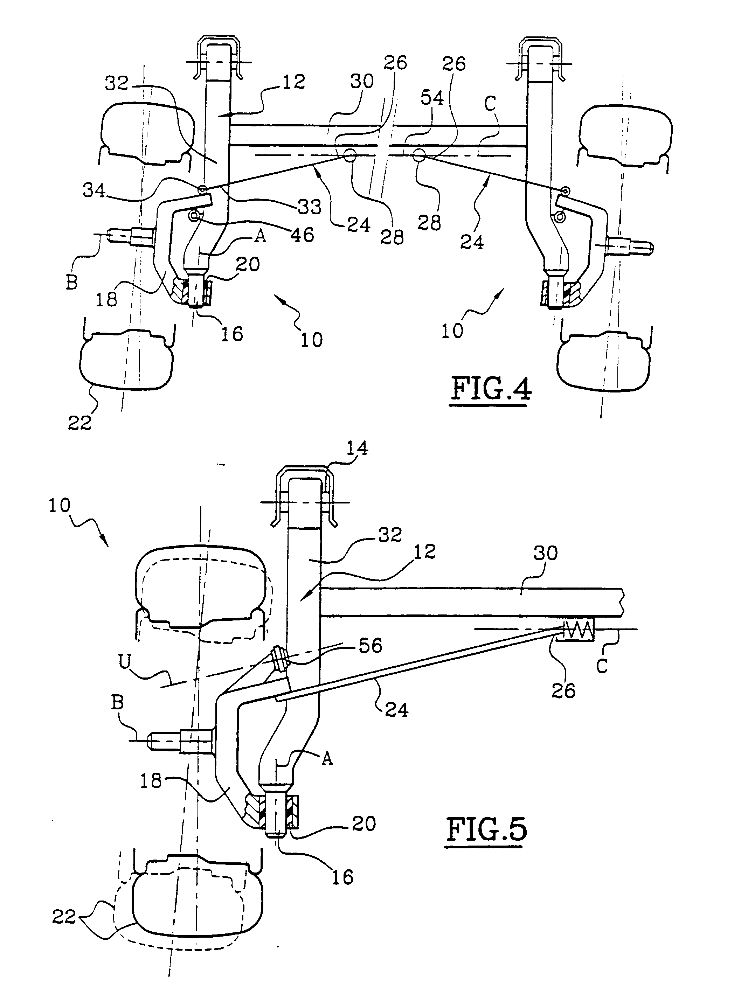

La figure 4 illustre un deuxième mode de réalisation de l'invention dans lequel deux demi-essieux 10 selon l'invention sont couplés pour former un essieu autodirecteur dans lequel les pivotements des portes-fusée 18 sont couplés.

Dans ce mode de réalisation, les paliers 28 élastiques de guidage sont couplés dans leur mouvements transversaux. Ceci peut, par exemple et de façon non limitative de l'invention être obtenu en utilisant en lieu et place des paliers 28 élastiques de guidage décrits en référence aux figures 1b et 2b, des paliers similaires mais qui, d'une part, ne comporte pas d'épaulement 42 pour la bague 36 et d'épaulement 44 pour le bloc élastomère 38 et d'autre part, dont les bagues 36 sont rendues solidaires l'une de l'autre, par exemple par une barre de couplage 54 transversale rigide.

Suivant ce mode de réalisation, les barres de guidage 24 des deux demi-essieux opposés étant couplées par la barre 54 de couplage, les deux portes-fusée 18 des demi-essieux 10 opposés sont eux aussi couplés en rotation. De la sorte, comme l'illustre la figure 4, lorsque la roue 22 de gauche est sollicitée transversalement, l'essieu autodirecteur provoque un braquage induit de celle-ci et de la roue 22 droite non sollicitée vers la droite, ce qui conduit à un braquage induit de tout l'essieu.

La figure 5 illustre un troisième mode de réalisation en variante dans lequel la tige 46 d'immobilisation verticale précédemment décrite en référence aux figures 1a à 4 peut être avantageusement remplacée par un joint élastique 56 de retenue verticale qui lie directement le porte-fusée 18 à la branche longitudinale 32 du bras 12.

Ce joint élastique 56 présente un raideur élevée dans la direction verticale pour jouer un rôle de retenue verticale analogue à celui de la tige de retenue verticale 46 précédemment évoquée.

Avantageusement, ce joint élastique 56 peut aussi jouer un rôle de butée transversale pour le porte-fusée 18. Ainsi, le joint élastique 56 peut par exemple être un joint de direction axiale U comprise dans le plan horizontal et être de structure analogue au palier 28 de guidage, c'est à dire qu'il peut comporter une bague intérieure, à laquelle est liée le porte-fusée 18, et dont la périphérie extérieure est montée serrée dans un bloc élastomère, lui même monté serré dans un cavalier qui est lié à la branche longitudinale 32 du bras 12. La bague comporte alors un épaulement tourné vers le demi-essieu opposé, qui prend appui sur le bloc élastomère, lequel bloc comporte aussi un épaulement en appui sur la cavalier.

De la sorte, le joint élastique de retenue verticale est mobile entre une position de repos et une position de déformation dans la direction U vers le demi-essieu opposé pour laquelle l'ajustement serré de la bague du bloc élastomère et du cavalier ne permet le déplacement axial de la bague par rapport au cavalier suivant la direction U que vers le demi-essieu opposé.

Lorsque, au contraire, le porte-fusée 18 est sollicité transversalement en éloignement du demi-essieu opposé, comme c'est le cas notamment en cas de freinage du véhicule, le joint élastique 56, de raideur élevée dans le sens opposé au demi-essieu opposé, est comprimé axialement entre l'épaulement de la bague et l'épaulement du cavalier, et réalise ainsi une butée axiale du porte-fusée 18 en éloignement du demi-essieu opposé.

Les figures 6 à 8 illustrent un quatrième et un cinquième mode de réalisation de l'invention pour lesquels la barre de guidage 24 est inclinée dans le plan horizontal d'un angle β ayant une valeur réduite. Cette configuration peut notamment être particulièrement avantageuse pour des questions de réduction d'encombrement de ladite barre de guidage 24.

En l'absence de modification du palier élastique de guidage 28, la faible inclinaison d'angle β de la barre de guidage 24 se traduirait par un éloignement du plan de la roue 22 du centre instantané de rotation du porte-fusée 18, ce centre instantané de rotation étant situé à l'intersection de la direction de la barre 24 de guidage et de la normale à l'axe du palier 20 de liaison.

Pour éviter un trop grand éloignement du centre instantané de rotation du plan de la roue 18, le palier 28 de guidage est monté avec jeu pour coulisser transversalement suivant son axe transversal et des moyens supplémentaires de guidage, qui sont inclinés d'un angle γ élevé par rapport à la branche 30 transversale du bras 12, sont interposés entre le porte-fusée 18 et la branche longitudinale 32 du bras 12, ces moyens supplémentaires de guidage assurant les fonctions de rappel élastique et de butée élastique du porte-fusée 18.

Dans ces modes de réalisation , comme illustré sur les figures 6 à 8, la barre 24 de guidage n'est susceptible de transmettre des efforts transversaux résultant des sollicitations transversales de la roue 22 au palier 28 de guidage qu'en fin de son jeu de coulissement, le palier 28 de guidage étant coulissant et ne participant qu'en fin de course à la reprise des efforts horizontaux de la roue 22 sollicitée transversalement.

A cet effet, le palier 28 de guidage comporte une raideur réduite suivant sa direction axiale transversale.

Le palier 28 est donc sensiblement "libre" dans la direction transversale le long de sa course de coulissement et autorise un déplacement transversal de l'extrémité 26 de la barre de guidage 24, et donc un déplacement transversal de la barre de guidage 24 qui permet, en réponse à une sollicitation transversale de la roue 22 vers le demi-essieu opposé (non représenté, vers la droite des figures 6 et 7) un pivotement d'axe vertical dans le sens horaire du porte-fusée 18, qui permet à celui-ci de provoquer un braquage induit de la roue 22.

Par ailleurs, le palier de guidage 28 comporte une raideur verticale importante pour assurer la reprise des sollicitations verticales transmises par la roue 22 au porte-fusée 18 et à la barre de guidage 28.

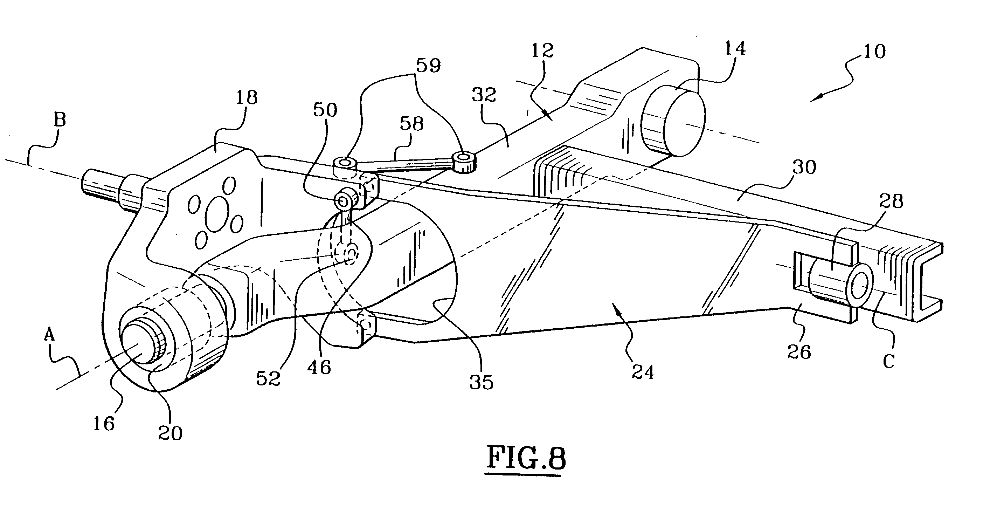

Selon le quatrième mode de réalisation représenté aux figures 6 et 8, les moyens supplémentaires de guidage sont constitués par une bielle de guidage 58 qui est inclinée de l'angle γ par rapport à la branche transversale 30 du bras 12, et qui lie le porte-fusée 18 à la branche longitudinale 32 du bras 12. Cette bielle de guidage 58 est par exemple montée entre le porte-fusée 18 et la branche longitudinale 32 du bras 12 par l'intermédiaire de rotules 59. Dans cette configuration, les moyens de butée de la barre de guidage 24 à l'encontre de son mouvement en éloignement du bras opposé de l'essieu sont donc constitués par la bielle 58 de guidage qui est inextensible et est par conséquent à même de retenir le porte-fusée 18 dans ses déplacements en éloignement du demi-essieu 12 opposé.

Le centre instantané de rotation du mouvement de pivotement du porte-fusée 18 est alors situé à l'intersection de la direction de la bielle 58 de guidage et de la normale à l'axe du palier 20 de liaison.

Par ailleurs, comme l'illustrent les figures 6 et 8, les moyens de butée verticale du porte-fusée 18 par rapport au bras 12 sont toujours constitués de la tige 46 d'immobilisation verticale, qui comme on l'a vu permet d'éviter le basculement du porte-fusée 18 et de la barre de guidage 24 autour d'un axe passant par les centres respectifs des paliers de liaison 20 et de guidage 28.

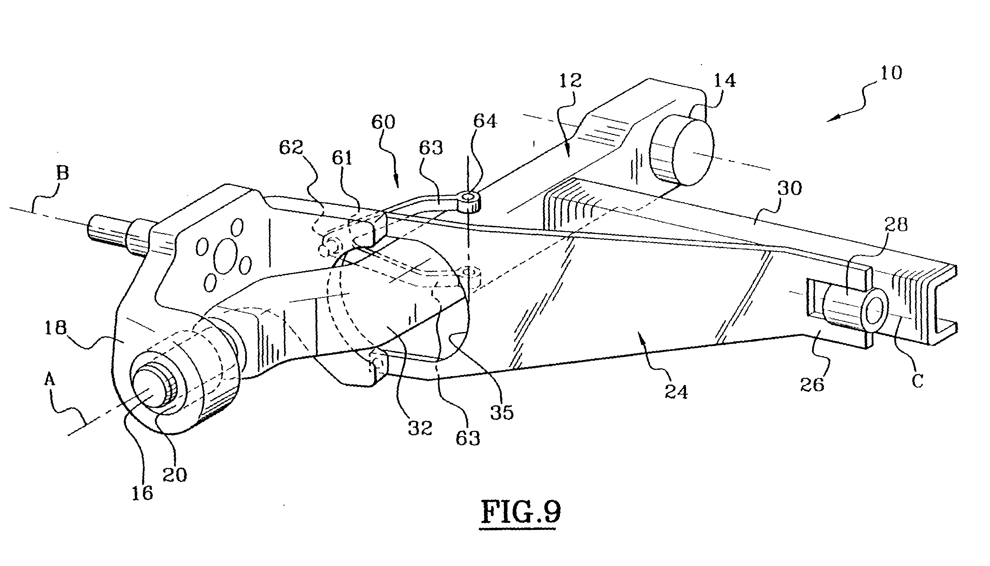

Enfin, les figures 7 et 9 illustrent un cinquième et dernier mode de réalisation de l'invention pour lequel les moyens de butée verticale et les moyens de guidage supplémentaires de la barre de guidage 24 sont constitués par une biellette 60 unique en forme de Y. La biellette 60 présente sensiblement la forme d'un Y couché, de direction générale comprise dans le plan horizontal, qui est inclinée de l'angle γ élevé par rapport à l'axe transversal du palier élastique déformable pour constituer les moyens de guidage supplémentaires. La biellette 60 est liée au porte-fusée par l'intermédiaire d'une rotule 62 qui agencée à l'extrémité de sa branche convergente 61.

Aux extrémités de ses branches divergentes 63, la biellette 60 est liée au bras 12 par deux paliers élastiques 64 d'axe vertical, pour constituer les moyens de butée verticale du porte-fusée 18. Le porte-fusée 18 étant lié à la barre 24 de guidage, cette biellette 60 empêche ainsi avantageusement le basculement de la barre 24 de guidage autour de l'axe passant par les centres respectifs des paliers de liaison 20 et de guidage 28.

Ainsi, l'autodirecteur formé de la réunion des deux demi-essieux 10 permet avantageusement, en situation de virage, d'obtenir un braquage induit d'au moins la roue en appui à l'extérieur du virage, et de guider ce braquage induit de façon précise et contrôlée.

## Revendications

1. Essieu autodirecteur pour un véhicule, notamment automobile, formé de deux demi-essieux (10) opposés comportant chacun un bras (12) indépendant sensiblement longitudinal qui est monté pivotant sur un arbre transversal (14) lié à la caisse du véhicule, du type dans lequel une extrémité libre arrière (16) de chaque bras (12) porte un porte-fusée (18) comportant un palier d'axe transversal pour une roue (22) du véhicule, du type dans lequel le porte-fusée (18) est lié au bras (12) par l'intermédiaire d'au moins un palier (20) élastique de liaison d'axe longitudinal (A) qui est susceptible, lorsque la roue (22) est sollicitée transversalement en appui, de se déformer en s'écartant de son axe longitudinal (A), pour articuler le porte-fusée (18) en rotation autour d'un axe sensiblement vertical et provoquer un braquage induit de la roue (22),
le porte-fusée (18) étant lié au bras, en arrière de l'axe (B) de la roue, par ledit au moins un palier (20) élastique de liaison d'axe longitudinal (A), et étant lié au bras (12), en avant de l'axe (B) de la roue (22), par l'intermédiaire d'au moins une barre (24) de guidage **caractérisé en ce que** ladite barre (24) de guidage est de direction générale comprise dans un plan horizontal, et **en ce que** son extrémité (26) de liaison au bras est guidée par un palier élastique (28) déformable de guidage.

2. Essieu autodirecteur selon la revendication précédente, **caractérisé en ce que** la barre de guidage (24) est inclinée dans ledit plan horizontal d'un angle déterminé (α, β) par rapport à l'axe (C) du palier élastique (28) déformable de guidage.

3. Essieu autodirecteur selon la revendication précédente **caractérisée en ce que** l'axe (C) du palier élastique déformable de guidage est transversal.

4. Essieu autodirecteur selon la revendication précédente, **caractérisé en ce que** l'angle (β) d'inclinaison de la barre (24) par rapport à l'axe transversal (C) du palier élastique (28) déformable de guidage est d'une valeur faible, et **en ce que** le palier élastique (28) déformable de guidage peut coulisser transversalement suivant son axe (C) transversal.

5. Essieu autodirecteur selon la revendication précédente, **caractérisé en ce que** le porte-fusée (18) est lié au bras (12) par des moyens supplémentaires de guidage comportant une bielle (58) de guidage de direction générale comprise dans un plan horizontal, qui est inclinée d'un angle (γ) d'une valeur élevée par rapport à l'axe transversal (C) du palier élastique (28) déformable de guidage.

6. Essieu autodirecteur selon la revendication 3, **caractérisé en ce que** l'angle (α) d'inclinaison de la barre (24) par rapport à l'axe transversal (C) du palier élastique (28) déformable est d'une valeur élevée et **en ce que** le palier élastique (28) déformable de guidage est monté sans jeu dans la direction transversale.

7. Essieu autodirecteur selon l'une quelconque des revendications précédentes, **caractérisé en ce que** la barre (24) de guidage comporte des moyens de rappel élastique à l'encontre de son mouvement vers le demi-essieu (10) opposé et comporte des moyens de butée à l'encontre de son mouvement en éloignement du demi-essieu (10) opposé.

8. Essieu autodirecteur selon la revendication 7 prise en combinaison avec les revendications 4 et 5, **caractérisé en ce que** les moyens de rappel élastique de la barre (24) de guidage à l'encontre de son mouvement vers le demi-essieu (10) opposé sont obtenus par la raideur réduite selon la direction transversale du palier élastique (28) déformable de guidage qui s'oppose au mouvement de la barre (24) vers le demi-essieu opposé seulement en fin de course du mouvement de coulissement transversal du palier élastique (24) déformable de guidage, et **en ce que** les moyens de butée de la barre de guidage à l'encontre de son mouvement en éloignement du demi-essieu (10) opposé sont constitués par la bielle (58) de guidage qui est liée au porte-fusée (18) et au bras (12) par des rotules, et qui s'oppose en traction au mouvement de la barre (24) en éloignement du demi-essieu (10) opposé.

9. Essieu autodirecteur selon la revendication 7 prise en combinaison avec la revendication 6, **caractérisé en ce que** les moyens de rappel élastique de la barre (24) de guidage à l'encontre de son mouvement vers le demi-essieu (10) opposé sont obtenus par le palier élastique (28) déformable de guidage qui présente une raideur réduite selon la direction transversale vers le demi-essieu opposé, et **en ce que** les moyens de butée de la barre (24) de guidage à l'encontre de son mouvement en éloignement du demi-essieu opposé sont constitués par le palier élastique (28) déformable de guidage qui présente une raideur élevée selon la direction transversale en éloignement du demi-essieu opposé.

10. Essieu autodirecteur selon l'une quelconque des revendications précédentes, **caractérisé en ce qu'**il comporte des moyens de butée verticale du porte-fusée (18) par rapport au bras (12) pour s'opposer au basculement du porte-fusée (18) suivant un axe passant par le palier élastique (20) longitudinal arrière de liaison et le palier élastique (28) déformable transversal de guidage.

11. Essieu autodirecteur selon la revendication 10, **caractérisé en ce que** les moyens de butée verticale du porte-fusée (18) par rapport au bras (12) comportent une tige (46) d'immobilisation de direction verticale qui est agencée en avant de l'axe (B) de la roue (22) et dont les extrémités sont fixées sur le porte-fusée (18) et sur le bras (12).

12. Essieu autodirecteur selon la revendication 6, **caractérisé en ce que** les moyens de butée verticale du porte-fusée (18) par rapport au bras (12) comportent un joint élastique (56) de retenue verticale qui lie directement le porte-fusée (18) au bras (12) et qui est d'une raideur élevée suivant la direction verticale.

13. Essieu autodirecteur selon la revendication 12, **caractérisé en ce que** le joint élastique (18) de retenue verticale présente une raideur réduite suivant une direction horizontale vers le demi-essieu (10) opposé et une raideur élevée suivant une direction horizontale en éloignement du demi-essieu (10) opposé.

14. Essieu autodirecteur selon la revendication 10 prise en combinaison avec la revendication 5, **caractérisé en ce qu'**il comporte une biellette (60) en forme de Y couché, de direction générale comprise dans le plan horizontal, qui est inclinée d'un angle (γ) élevé par rapport à l'axe transversal (C) du palier élastique (28) déformable, qui est liée au porte-fusée (18) par une rotule (62) agencée à l'extrémité de sa branche convergente, et qui est liée au bras (12) par deux paliers (64) élastiques d'axe vertical agencés aux extrémités de ses branches divergentes, pour constituer simultanément lesdits moyens supplémentaires de guidage et les moyens de butée verticale du porte-fusée (18).

15. Essieu autodirecteur selon l'une quelconque des revendications précédentes, **caractérisé en ce que** la barre (24) de guidage présente la forme d'une plaque triangulaire flexible de direction générale comprise dans ledit plan horizontal dont le sommet principal (26) est lié au palier élastique (28) déformable transversal de guidage et dont les deux sommets (33) de sa base sont liés au porte-fusée (18).

16. Essieu autodirecteur selon la revendication précédente, **caractérisé en ce que** les deux sommets (33) de la base de la plaque triangulaire sont articulés sur le porte-fusée par deux bagues élastiques (34) d'axe vertical.

17. Essieu autodirecteur selon la revendication 15, **caractérisé en ce que** les deux sommets (33) de la base de la plaque triangulaire sont liés rigidement au porte-fusée (18).

18. Essieu autodirecteur selon l'une quelconque des revendications 3 à 17, **caractérisé en ce que** les barres (24) de guidage de chaque demi-essieu (10) sont liées en leurs extrémités (26) de liaison portant les paliers élastiques (28) de guidage par une barre (54) de couplage transversale rigide, pour coupler les mouvements de rotation d'axe vertical de chacun des portes-fusée (18) de l'essieu.

## Patentansprüche

1. Selbstlenkende Achse für ein Fahrzeug, insbesondere ein Kraftfahrzeug, bestehend aus zwei sich gegenüber liegenden Halbachsen (10), deren jede einen unabhängigen Lenker (12) aufweist, der sicn im wesentlichen in Längsrichtung erstreckt und der drehbar an einer Querachse (14) angelenkt ist, die mit dem Aufbau des Fahrzeugs verbunden ist, wobei ein freies hinteres Ende (16) eines jeden Lenkers (12) einen Achsschenkel (18) trägt, der ein mit einer Querachse versehenes Lager für ein Rad (22) des Fahrzeugs aufweist und wobei der Achsschenkel (18) mit dem Lenker (12) über mindestens ein federndes Verbindungslager (20) mit einer Längsachse (A) verbunden ist, das, wenn das Rad (22) in Querrichtung mit einer Kraft beaufschlagt wird, sich verformt und sich dabei von seiner Längsachse (A) entfernt um dem Achsschenkel (18) eine Verdrehung um eine im wesentlichen senkrechte Achse zu ermöglichen und einen erzwungenen Radeinschlag des Rades (22) hervorzurufen und wobei der Achsschenkel (18) mit dem Lenker hinter der Radachse (B) verbunden ist über das wenigstens eine federnde Verbindungslager (20) mit der Längsachse (A), während er mit dem Lenker (12) vor der Achse (B) des Rades (22) über mindestens eine Führungsschiene (24) verbunden ist, **dadurch gekennzeichnet, dass** die Führungsschiene (24) sich in einer im wesentlichen waagrechten Ebene erstreckt und dass ihr Verbindungsende (26) mit dem Lenker von einem verformbaren federnden Führungslager (28) geführt wird.

2. Selbstlenkende Achse nach dem vorhergehenden Anspruch, **dadurch gekennzeichnet, dass** die Führungsschiene (24) in der waagrechten Ebene um einen vorgegebenen Winkel (α,β) bezüglich der Achse (C) des verformbaren federnden Führungslagers (28) geneigt ist.

3. Selbstlenkende Achse nach dem vorhergehenden Anspruch, **dadurch gekennzeichnet, dass** die Achse (C) des verformbaren federnden Führungslagers (28) sich in Querrichtung erstreckt.

4. Selbstlenkende Achse nach dem vorhergehenden Anspruch, **dadurch gekennzeichnet, dass** der Neigungswinkel (β) der Schiene (24) bezüglich der Querachse (C) des verformbaren federnden Führungslagers (28) einen geringen Wert aufweist und dass das verformbare federnde Führungslager (28) in Querrichtung entlang seiner Achse (C) gleiten kann.

5. Selbstlenkende Achse nach dem vorhergehenden Anspruch, **dadurch gekennzeichnet, dass** der Achsschenkel (18) über eine zusätzliche Führungsanordnung mit dem Lenker (12) verbunden ist, die eine Führungswelle (58) aufweist, die sich im wesentlichen in einer waagrechten Ebene erstreckt und die um einen größeren Winkel (γ) bezüglich der Querachse (C) des verformbaren federnden Führungslagers (28) geneigt ist.

6. Selbstlenkende Achse nach Anspruch 3, **dadurch gekennzeichnet, dass** der Neigungswinkel (α) der Schiene (24) bezüglich der Querachse (C) des verformbaren federnden Lagers (28) einen erhöhten Wert aufweist und dass das verformbare federnde Führungslager (28) ohne Spiel in Querrichtung eingebaut ist.

7. Selbstlenkende Achse nach einem der vorhergehenden Ansprüche, **dadurch gekennzeichnet, dass** die Führungsschiene (24) eine elastische Rückholanordnung aufweist, die ihrer Bewegung in Richtung zur gegenüber liegenden Halbachse (10) hin entgegen wirkt und einen Anschlag aufweist, der ihrer Bewegung in Richtung von der gegenüber liegenden Halbachse (10) weg entgegen wirkt.

8. Selbstlenkende Achse nach Anspruch 7 in Kombination mit den Ansprüchen 4 und 5, **dadurch gekennzeichnet, dass** die elastische Rückholanordnung für die Führungsschiene (24), die ihrer Bewegung zur gegenüber liegenden Halbachse (10) hin entgegen wirkt, durch die verringerte Härte in Querrichtung des verformbaren federnden Führungslagers (28) gebildet wird, die der Bewegung der Schiene (24) in Richtung zur gegenüberliegenden Halbachse (10) hin erst am Ende des Verschiebeweges in Querrichtung des verformbaren federnden Führungslagers (28) entgegen wirkt und dass der Anschlag der Führungsschiene, der ihrer Bewegung in Richtung des Entfernens von der gegenüber liegenden Halbachse (10) weg entgegen wirkt aus der Führungswelle (58) besteht, die mit dem Achsschenkel (18) und mit dem Lenker (12) über Kugelgelenke verbunden ist und die dem Zug während der Bewegung der Schiene (24) bei der Entfernung von der gegenüber liegenden Halbachse (10) weg entgegen wirkt.

9. Selbstlenkende Achse nach Anspruch 7 in Kombination mit Anspruch 6, **dadurch gekennzeichnet, dass** die elastische Rückholanordnung für die Führungsschiene (24), die ihrer Bewegung zur gegenüber liegenden Halbachse (10) hin entgegen wirkt durch das verformbare federnde Führungslager (28) gebildet wird, das eine verringerte Härte in Querrichtung zur gegenüber liegenden Halbachse hin aufweist und dass der Anschlag der Führungsschiene (24), der ihrer Bewegung bei der Entfernung von der gegenüber liegenden Halbachse weg entgegen wirkt durch das verformbare federnde Führungslager (28) gebildet wird, das eine erhöhte Härte in der Querrichtung des Entfernens von der gegenüber liegenden Halbachse weg aufweist.

10. Selbstlenkende Achse nach einem der vorhergehenden Ansprüche, **dadurch gekennzeichnet, dass** sie einen senkrechten Anschlag des Achsschenkels (18) für den Lenker (12) aufweist um einer Verschwenkung des Achsschenkels (18) um eine Achse zu verhindern, die durch das in Längsrichtung hinten liegende verformbare federnde Verbindungslager (20) und das verformbare quer angeordnete federnde Führungslager (28) verläuft.

11. Selbstlenkende Achse nach Anspruch 10, **dadurch gekennzeichnet, dass** der senkrechte Anschlag des Achsschenkels (18) für den Lenker (12) einen senkrecht ausgerichteten Feststellstab '46) aufweist, der vor der Achse (B) des Rades (22) angeordnet ist und dessen Enden mit dem Achsschenkel und mit dem Lenker (12) verbunden sind.

12. Selbstlenkende Achse nach Anspruch 6, **dadurch gekennzeichnet, dass** der senkrechte Anschlag des Achsschenkels (18) für den Lenker (12) ein elastisches Gelenk (56) zur senkrechten Halterung aufweist, das den Achsschenkel (18) direkt mit dem Lenker (12) verbindet und das eine erhöhte Härte in der senkrechten Richtung aufweist.

13. Selbstlenkende Achse nach Anspruch 12, **dadurch gekennzeichnet, dass** das elastische Gelenk (58) zur senkrechten Halterung eine verringerte Härte in einer waagrechten Richtung zur gegenüber liegenden Halbachse (10) hin aufweist und eine erhöhte Härte aufweist in einer waagrechten Richtung des Entfernens von der gegenüber liegenden Halbachse (10) weg.

14. Selbstlenkende Achse nach Anspruch 10 in Kombination mit Anspruch 5, **dadurch gekennzeichnet, dass** sie einen Schwingarm (60) in Form eines liegenden Y aufweist, der sich im wesentlichen in einer waagrechten Ebene erstreckt, der um einen größeren Winkel (γ) bezüglich der Querachse (C) des verformbaren federnden Lagers (28) geneigt ist, der mit dem Achsschenkel (18) über ein Kugelgelenk (62) verbunden ist, das am Ende seines konvergierenden Armes angeordnet ist und der mit dem Lenker (12) über zwei elastische Lager (64) mit senkrechten Achsen verbunden ist, die an den Enden seiner divergierenden Arme angeordnet sind um zugleich die zusätzliche Führungsanordnung und den senkrechten Anschlag des Achsschenkels (18) zu bilden.

15. Selbstlenkende Achse nach einem der vorhergehenden Ansprüche, **dadurch gekennzeichnet, dass** die Führungsschiene (24) die Gestalt einer flexiblen dreieckigen Platte aufweist, deren eine Ecke (26) mit dem verformbaren federnden in Querrichtung angeordneten Führungslager (28) verbunden ist und deren beide andere Ecken (33) mit dem Achsschenkel (18) verbunden sind.

16. Selbstlenkende Achse nach dem vorhergehenden Anspruch, **dadurch gekennzeichnet, dass** die beiden Ecken (33) der dreieckigen Platte mit dem Achsschenkel über zwei elastische Ringe (34) mit senkrechten Achsen verbunden sind.

17. Selbstlenkende Achse nach Anspruch 15, **dadurch gekennzeichnet, dass** die beiden Ecken (33) der dreieckigen Platte in steifer Weise mit dem Achsschenkel verbunden sind.

18. Selbstlenkende Achse nach einem der Ansprüche 3 bis 17, **dadurch gekennzeichnet, dass** die Führungsschienen (24) der beiden Halbachsen (10) an ihren Verbindungsenden (26), die mit federnden Führungslagern (28) versehen sind, miteinander über eine quer angeordnete steife Koppelstange (54) verbunden sind zur Übertragung der Drehbewegungen der senkrechten Achse jedes Achsschenkels (18) der Achse.

## Claims

1. Self-steering axle for a vehicle, in particular an automotive vehicle, formed by two opposite half-axles (10), each comprising a substantially longitudinal independent arm (12) that is mounted in a pivoting manner on a transversal shaft (14) connected to the vehicle body, of the type where a rear, free extremity (16) of each arm (12) carries a steering knuckle pin (18) having a bearing of transversal axis for a wheel (22) of the vehicle, of the type where the steering knuckle pin (18) is connected to the arm (12) by means of at least one elastic connecting bearing (20) of longitudinal axis (A) that is capable of deforming when the wheel (22) is loaded sideways, by moving away from its longitudinal axis (A) in order to articulate the steering knuckle pin (18) in a rotary manner about a substantially vertical axis and to cause induced deflection of the wheel (22), the steering knuckle pin (18) being connected to the arm, to the rear of the axis (B) of the wheel, by said at least one elastic connecting bearing (20) of longitudinal axis (A), and being connected to the arm (12) in front of the axis (B) of the wheel (22) by means of at least one guide bar (24), **characterised in that** said guide bar (24) is of a general direction contained in a horizontal plane, and **in that** its extremity (26) for connection to the arm is guided by an elastic, deformable guide bearing (28).

2. Self-steering axle according to the preceding claim, **characterised in that** the guide bar (24) is inclined in said horizontal plane at a specific angle (α, β) with respect to the axis (C) of the elastic, deformable guide bearing (28).

3. Self-steering axle according to the preceding claim, **characterised in that** the axis (C) of the elastic, deformable guide bearing is transversal.

4. Self-steering axle according to the preceding claim, **characterised in that** the angle (β) of inclination of the bar (24) with respect to the transversal axis (C) of the elastic, deformable guide bearing (28) is of a small value, and **in that** the elastic, deformable guide bearing (28) can slide transversely along its transversal axis (C).

5. Self-steering axle according to the preceding claim, **characterised in that** the steering knuckle pin (18) is connected to the arm (12) by supplementary guide means comprising a joint rod (58) of a general direction contained in a horizontal plane, which is inclined by an angle (γ) of a high value with respect to the transverse axis (C) of the elastic, deformable guide bearing (28).

6. Self-steering axle according to claim 3, **characterised in that** the angle (α) of inclination of the bar (24) with respect to the transversal axis (C) of the elastic, deformable bearing (28) is of a high value, and **in that** this elastic, deformable guide bearing (28) is mounted with no travel in the transversal direction.

7. Self-steering axle according to any one of the preceding claims, **characterised in that** the guide bar (24) comprises elastic return means counter to its movement towards the opposite half-axle (10) and comprises thrust means counter to its movement away from the opposite half-axle (10).

8. Self-steering axle according to claim 7 taken in combination with claims 4 and 5, **characterised in that** the elastic return means for the guide bar (24) counter to its movement towards the opposite half-axle (10) are obtained by reduced rigidity in the transversal direction of the elastic, deformable guide bearing (28) that opposes the movement of the bar (24) towards the opposite half-axle solely at the end of the course of the transversal sliding movement of the elastic, deformable guide bearing (24), and **in that** the thrust means for the guide bar counter to its movement away from the opposite half-axle (10) are constituted by the joint rod (58) that is connected to the steering knuckle pin (18) and to the arm (12) by ball joints, and that counters the movement of the bar away from the opposite half-axle (10) by traction.

9. Self-steering axle according to claim 7 taken in combination with claim 6, **characterised in that** the elastic return means for the guide bar (24) counter to its movement towards the opposite half-axle (10) are obtained by the elastic, deformable guide bearing (28) that has reduced rigidity according to the transversal direction towards the opposite half-axle, and **in that** the thrust means for the guide bar (24) counter to its movement away from the opposite half-axle are constituted by the elastic, deformable guide bearing (28) that has increased rigidity according to the transversal direction away from the opposite half-axle.

10. Self-steering axle according to any one of the preceding claims, **characterised in that** it comprises vertical thrust means for the steering knuckle pin (18) with respect to the arm (12) in order to oppose the rocking of the steering knuckle pin (18) along an axis passing through the rear longitudinal elastic connecting bearing (20) and the transversal elastic, deformable guide bearing (28).

11. Self-steering axle according to claim 10, **characterised in that** the vertical thrust means of the steering knuckle pin (18) with respect to the arm (12) comprise a fixing pin (46) of vertical direction that is fabricated in front of the axis (B) of the wheel (22), and the extremities of which are fixed onto the steering knuckle pin (18) and onto the arm (12).

12. Self-steering axle according to claim 6, **characterised in that** the vertical thrust means of the steering knuckle pin (18) with respect to the arm (12) comprise an elastic, vertical retention joint (56) that directly connects the steering knuckle pin (18) to the arm (12), and which has increased rigidity in the vertical direction.

13. Self-steering axle according to claim 12, **characterised in that** the elastic vertical retention joint (18) has reduced rigidity in a horizontal direction towards the opposite half-axle (10) and increased rigidity in a horizontal direction away from the opposite half-axle (10).

14. Self-steering axle according to claim 10 taken in combination with claim 5, **characterised in that** it comprises a connecting rod (60) in the form of a Y lying on its side, of a general direction contained in the horizontal plane, which is inclined at a large angle (γ) with respect to the transversal axis (C) of the elastic, deformable bearing (28), which is connected to the steering knuckle pin (18) by a ball joint (62) fabricated at the extremity of its convergent branch, and which is connected to the arm (12) by two elastic bearings (64) in a vertical axis fabricated at the extremities of its divergent branches in order to constitute both said supplementary guide means and the vertical thrust means of the steering knuckle pin (18).

15. Self-steering axle according to any one of the preceding claims, **characterised in that** the guide bar (24) has the shape of a flexible triangular plate of a general direction contained in said horizontal plane, the main point (26) of which is connected to the transversal elastic deformable guide bearing (28) and the two points (33) at the base of which are connected to the steering knuckle pin (18).

16. Self-steering axle according to the preceding claim, **characterised in that** the two points (33) at the base of the triangular plate are articulated on the steering knuckle pin by two elastic rings (34) along a vertical axis.

17. Self-steering axle according to claim 15, **characterised in that** the two points (33) at the base of the triangular plate are connected rigidly to the steering knuckle pin (18).

18. Self-steering axle according to any one of claims 3 to 17, **characterised in that** the guide bars (24) of each half-axle (10) are connected at their connecting extremities (26), carrying the elastic guide bearings (28), by a rigid transverse coupling bar (54) in order to couple the movements of rotation along a vertical axis of each of the steering knuckle pins (18) of the axle.
